(19) Europäisches Patentamt / European Patent Office / Office européen des brevets

(11) **EP 4 571 704 A1**

(12) **EUROPEAN PATENT APPLICATION**
published in accordance with Art. 153(4) EPC

(43) Date of publication:
**18.06.2025 Bulletin 2025/25**

(21) Application number: 23852846.7

(22) Date of filing: **01.08.2023**

(51) International Patent Classification (IPC):
*G08G 1/09* (2006.01)  *G08G 1/01* (2006.01)
*G08G 1/0962* (2006.01)  *H04W 4/40* (2018.01)
*G08C 17/02* (2006.01)  *G06V 20/54* (2022.01)

(52) Cooperative Patent Classification (CPC):
G06V 20/54; G08C 17/02; G08G 1/01; G08G 1/09;
G08G 1/0962; H04W 4/40

(86) International application number:
**PCT/KR2023/011210**

(87) International publication number:
**WO 2024/034966 (15.02.2024 Gazette 2024/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.08.2022 KR 20220098750**
**19.12.2022 KR 20220178229**

(71) Applicant: **LG Electronics Inc.**
**Yeongdeungpo-gu**
**Seoul 07336 (KR)**

(72) Inventors:
• **LEE, Yoonjong**
**Seoul 06772 (KR)**
• **KIM, Myoungseob**
**Seoul 06772 (KR)**
• **SEO, Hanbyul**
**Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **METHOD FOR TRANSMITTING/RECEIVING SIGNAL IN WIRELESS COMMUNICATION SYSTEM, AND DEVICE THEREFOR**

(57)   ABSTRACT: A method by which a device transmits information about object detection in an intelligent transport system (ITS), according to various embodiments, comprises: segmenting sensor data about objects into a plurality of data subsets; performing object detection on at least one from among the plurality of data subsets; and transmitting a message including results of the object detection, wherein priority related to the object detection is set for each data subset, and the device can perform object detection on a first data subset before object detection on a second data subset on the basis of the first data subset having a priority higher than that of the second data subset.

**FIG. 20**

segment sensor data into plural data subsets — C05

perform object detection — C10

transmit message including object detection result — C15

## Description

### TECHNICAL FIELD

The present disclosure relates to signal transmission and reception in a wireless communication system, and more particularly, to a method of transmitting or receiving signals related to an intelligent transportation system (ITS) and device therefor.

### BACKGROUND

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

A sidelink (SL) refers to a communication method in which a direct link is established between user equipment (UE), and voice or data is directly exchanged between UEs without going through a base station (BS). SL is being considered as one way to solve the burden of the base station due to the rapidly increasing data traffic.

V2X (vehicle-to-everything) refers to a communication technology that exchanges information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR). Even in NR, vehicle-to-everything (V2X) communication may be supported.

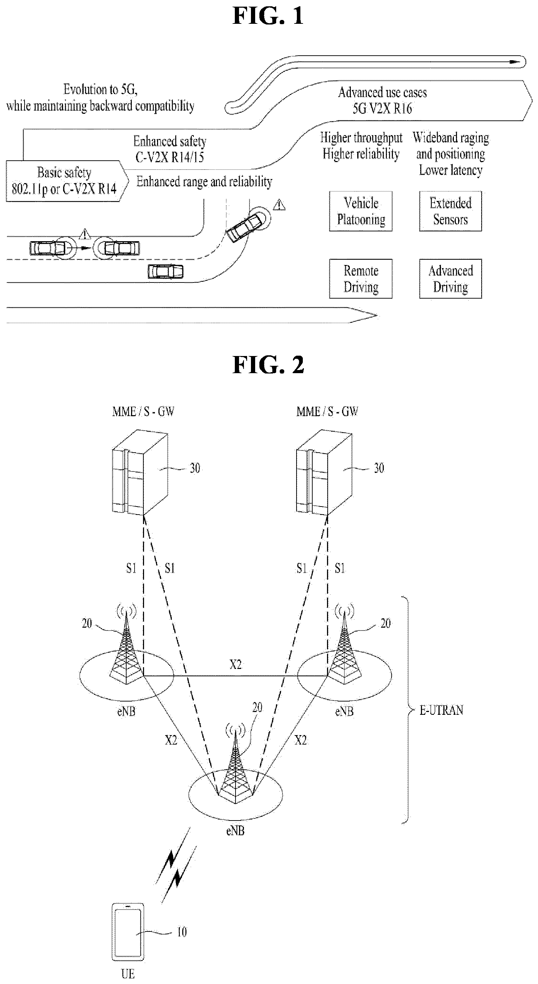

FIG. 1 is a diagram comparing RAT-based V2X communication before NR with NR-based V2X communication.

Regarding V2X communication, in RAT prior to NR, a scheme for providing a safety service based on V2X messages such as a basic safety message (BSM), a cooperative awareness message (CAM), and a decentralized environmental notification message (DENM) was mainly discussed. The V2X message may include location information, dynamic information, and attribute information. For example, the UE may transmit a periodic message type CAM and/or an event triggered message type DENM to another UE.

For example, the CAM may include dynamic state information about a vehicle such as direction and speed, vehicle static data such as dimensions, and basic vehicle information such as external lighting conditions and route details. For example, a UE may broadcast the CAM, and the CAM latency may be less than 100 ms. For example, when an unexpected situation such as a breakdown of the vehicle or an accident occurs, the UE may generate a DENM and transmit the same to another UE. For example, all vehicles within the transmission coverage of the UE may receive the CAM and/or DENM. In this case, the DENM may have a higher priority than the CAM.

Regarding V2X communication, various V2X scenarios have been subsequently introduced in NR. For example, the various V2X scenarios may include vehicle platooning, advanced driving, extended sensors, and remote driving.

For example, based on vehicle platooning, vehicles may dynamically form a group and move together. For example, to perform platoon operations based on vehicle platooning, vehicles belonging to the group may receive periodic data from a leading vehicle. For example, the vehicles belonging to the group may reduce or increase the distance between the vehicles based on the periodic data.

For example, based on advanced driving, a vehicle may be semi-automated or fully automated. For example, each vehicle may adjust trajectories or maneuvers based on data acquired from local sensors of nearby vehicles and/or nearby logical entities. Also, for example, each vehicle may share driving intention with nearby vehicles.

For example, on the basis of extended sensors, raw data or processed data acquired through local sensors, or live video data may be exchanged between a vehicle, a logical entity, UEs of pedestrians and/or a V2X application server. Thus, for example, the vehicle may recognize an environment that is improved over an environment that may be detected using its own sensor.

For example, for a person who cannot drive or a remote vehicle located in a dangerous environment, a remote driver or V2X application may operate or control the remote vehicle based on remote driving. For example, when a route is predictable as in the case of public transportation, cloud computing-based driving may be used to operate or control the remote vehicle. For example, access to a cloud-based back-end service platform may be considered for remote driving.

A method to specify service requirements for various V2X scenarios such as vehicle platooning, advanced driving, extended sensors, and remote driving is being discussed in the NR-based V2X communication field.

## DISCLOSURE

### TECHNICAL PROBLEM

An object of the present disclosure is to provide a method and apparatus for performing data processing related to object detection more accurately and more efficiently in an intelligent transportation system (ITS).

It will be appreciated by persons skilled in the art that the objects that could be achieved with the various embodiments of the present disclosure are not limited to what has been particularly described hereinabove and the above and other objects that the various embodiments of the present disclosure could achieve will be more clearly understood from the following detailed description.

### TECHNICAL SOLUTION

According to an aspect, a method of transmitting information about object detection by a device in an intelligent transportation system (ITS) may include segmenting sensor data for objects into a plurality of data subsets, performing object detection for at least one of the plurality of data subsets, and transmitting a message including a result of the object detection. A priority related to the object detection may be set for each data subset. The device may perform the object detection for a first data subset before a second data subset, based on the first data subset having a higher priority than the second data subset.

A result of the object detection for the first data subset may be transmitted before a result of the object detection of the second data subset.

The plurality of data subsets may be related to different physical regions. The priority may be determined based on a predefined importance for a corresponding physical region.

The priority may be determined based on whether vehicle-to-everything (V2X) communication is supported in a corresponding physical region.

The priority may be determined based on V2X communication with an object included in the data subset. A data subset for objects capable of exchanging V2X messages with the device may have a higher priority than a data subset for objects not capable of exchanging V2X messages with the device.

A device may obtain the sensor data for the objects through at least one sensor.

The sensor data may include an image of the objects.

The message may be a sensor data sharing message (SDSM) transmitted through wireless communication.

According to another aspect, a computer-readable recording medium recording a program for performing the above method may be provided.

According to another aspect, a device operating in an ITS may include a memory storing instructions, and a processor performing operations by executing the instructions. The operations of the processor may include segmenting sensor data for objects into a plurality of data subsets, performing object detection for at least one of the plurality of data subsets, and transmitting a message including a result of the object detection. A priority related to the object detection may be set for each data subset, and the object detection may be performed for a first data subset before a second data subset, based on the first data subset having a higher priority than the second data subset.

The device may further include a transceiver transmitting or receiving a wireless signal under the control of the processor.

The device may be a V2X terminal, a vehicle, or a road side unit (RSU).

### ADVANTAGEOUS EFFECTS

According to an embodiment of the present disclosure, data related to object detection in an intelligent transportation system (ITS) is processed according to a priority, thereby performing data processing more accurately and more efficiently.

Effects to be achieved by embodiment(s) are not limited to what has been particularly described hereinabove and other effects not mentioned herein will be more clearly understood by persons skilled in the art to which embodiment(s) pertain from the following detailed description.

## BRIEF DESCRIPTION OF THE DRAWINGS

The accompanying drawings, which are included to provide a further understanding of the disclosure and are incorporated in and constitute a part of this application, illustrate embodiments of the disclosure and together with the description serve to explain the principle of the disclosure.

FIG. 1 is a diagram for explaining by comparing vehicle-to-everything (V2X) communication based on radio access technology (RAT) before New Radio (NR) and V2X communication based on NR.

FIG. 2 illustrates the structure of a Long Term Evolution (LTE) system to which embodiment(s) are applicable.

FIG. 3 illustrates the structure of an NR system to which embodiment(s) are applicable.

FIG. 4 illustrates the structure of an NR radio frame to which embodiment(s) are applicable.

FIG. 5 illustrates the slot structure of an NR frame to which embodiment(s) are applicable.

FIG. 6 illustrates a radio protocol architecture for sidelink (SL) communication.

FIG. 7 illustrates UEs performing V2X or SL communication.

FIG. 8 illustrates resource units for V2X or SL communication.

FIG. 9 illustrates detected data including a video.

FIG. 10 illustrates an existing server-based object detection structure.

FIG. 11 illustrates an exemplary object detection structure according to an embodiment.

FIG. 12 is a diagram illustrating a V2X message-based distributed mode.

FIG. 13 is a diagram illustrating an image region-based distributed mode.

FIG. 14 illustrates an order of processing regions in a segmented region-based distributed mode.

FIG. 15 illustrates an important priority detection region.

FIG. 16 is a diagram illustrating an important region-based distributed mode.

FIG. 17 illustrates an example of detecting an effective V2X reception region with priority.

FIGS. 18 and 19 illustrate operations of a priority combination-based distributed mode, respectively.

FIG. 20 is a flowchart illustrating a method of transmitting information about object detection by a device in an intelligent transportation system (ITS) according to an embodiment.

FIG. 21 illustrates a communication system applied to the present disclosure.

FIG. 22 illustrates wireless devices applicable to the present disclosure.

FIG. 23 illustrates another example of a wireless device to which the present disclosure is applied.

FIG. 24 illustrates a vehicle or an autonomous driving vehicle applied to the present disclosure.

## DETAILED DESCRIPTION

The wireless communication system is a multiple access system that supports communication with multiple users by sharing available system resources (e.g., bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, a single carrier frequency (SC-FDMA) system, a multi carrier frequency division multiple access (MC-FDMA) system, and the like.

A sidelink refers to a communication scheme in which a direct link is established between user equipments (UEs) to directly exchange voice or data between UEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

5G NR is a successor technology of LTE-A, and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5G NR is mainly described, but the technical spirit of the embodiment(s) is not limited thereto

FIG. 2 illustrates the structure of an LTE system to which the present disclosure is applicable. This may also be called an evolved UMTS terrestrial radio access network (E-UTRAN) or LTE/LTE-A system.

Referring to FIG. 2, the E-UTRAN includes evolved Node Bs (eNBs) 20 which provide a control plane and a user plane to UEs 10. A UE 10 may be fixed or mobile, and may also be referred to as a mobile station (MS), user UE (UT), subscriber station (SS), mobile UE (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

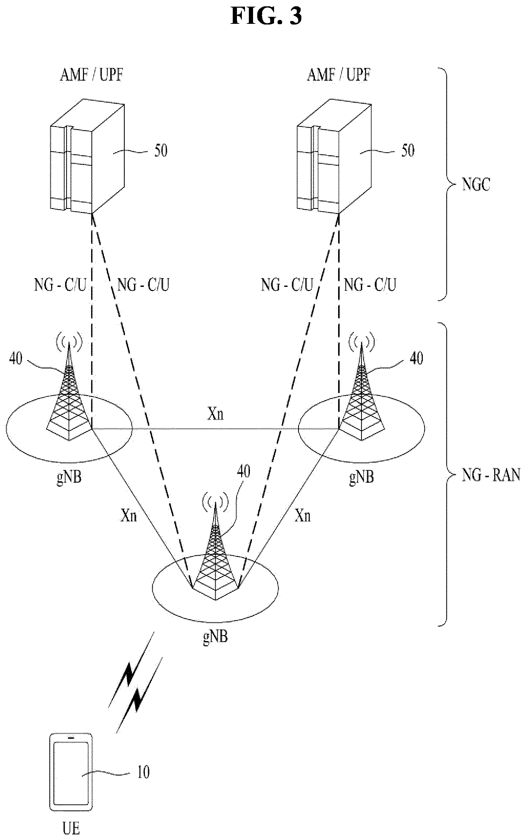

FIG. 3 illustrates the structure of a NR system to which the present disclosure is applicable.

Referring to FIG. 3, a next generation radio access network (NG-RAN) may include a next generation Node B (gNB) and/or an eNB, which provides user-plane and control-plane protocol termination to a UE. In FIG. 3, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

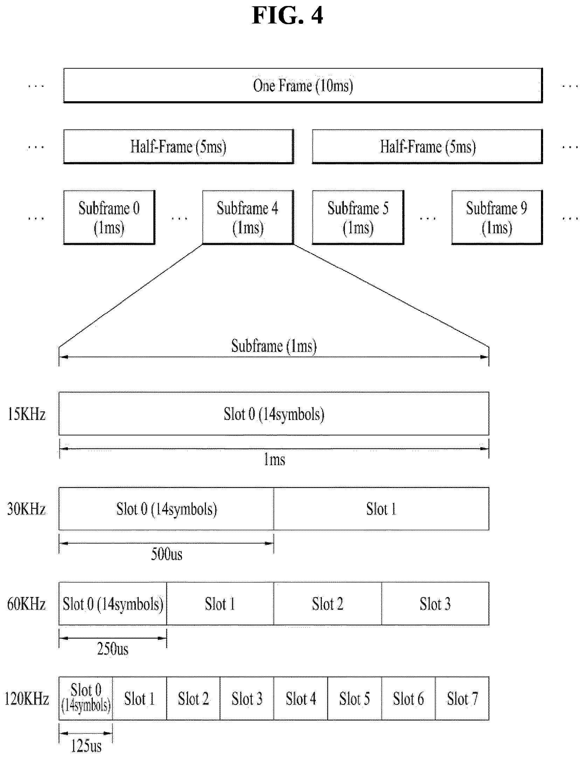

FIG. 4 illustrates the structure of a NR radio frame to which the present disclosure is applicable.

Referring to FIG. 4, a radio frame may be used for UL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot $N^{slot}_{symb}$, the number of slots per frame $N^{frame,u}_{slot}$, and the number of slots per subframe $N^{subframe,u}_{slot}$ according to an SCS configuration $\mu$ in the NCP case.

[Table 1]

| SCS (15*2u) | $N^{slot}_{symb}$ | $N^{frame,u}_{slot}$ | $N^{subframe,u}_{slot}$ |
|---|---|---|---|
| 15 kHz (u=0) | 14 | 10 | 1 |
| 30 kHz (u=1) | 14 | 20 | 2 |
| 60 kHz (u=2) | 14 | 40 | 4 |
| 120 kHz (u=3) | 14 | 80 | 8 |
| 240 kHz (u=4) | 14 | 160 | 16 |

Table 2 below lists the number of symbols per slot, the number of slots per frame, and the number of slots per subframe according to an SCS in the ECP case.

[Table 2]

| SCS (15*2^u) | $N^{slot}_{symb}$ | $N^{frame,u}_{slot}$ | $N^{subframe,u}_{slot}$ |
|---|---|---|---|
| 60 kHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description).

In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

[Table 3]

| Frequency Range designation | Corresponding frequency range | Subcarrier Spacing (SCS) |
|---|---|---|
| FR1 | 450 MHz - 6000 MHz | 15, 30, 60 kHz |
| FR2 | 24250 MHz - 52600 MHz | 60, 120, 240 kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

[Table 4]

| Frequency Range designation | Corresponding frequency range | Subcarrier Spacing (SCS) |
|---|---|---|
| FR1 | 410 MHz - 7125 MHz | 15, 30, 60 kHz |
| FR2 | 24250 MHz - 52600 MHz | 60, 120, 240 kHz |

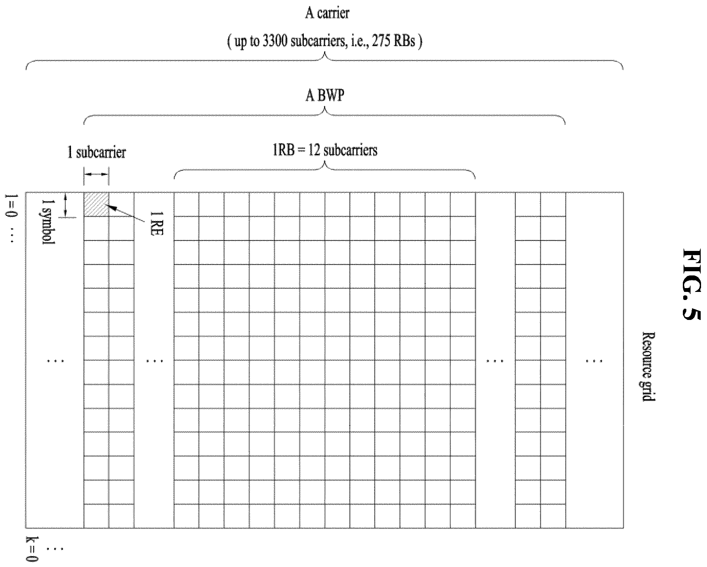

FIG. 5 illustrates the slot structure of a NR frame to which the present disclosure is applicable.

Referring to FIG. 5, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

Hereinafter, V2X or sidelink (SL) communication will be described.

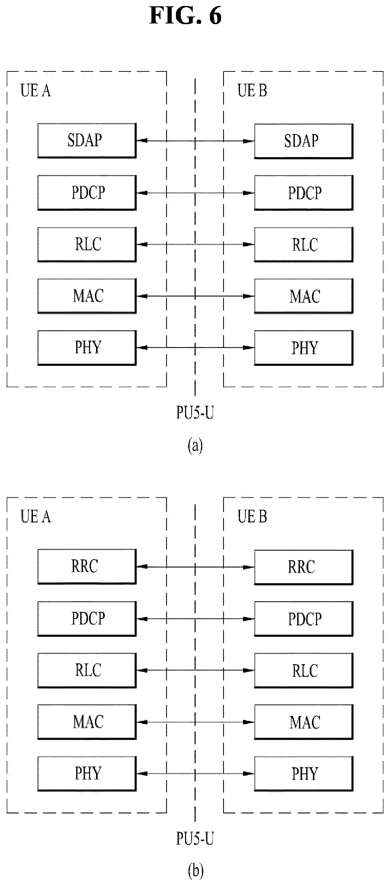

FIG. 6 illustrates a radio protocol architecture for SL communication. Specifically, FIG. 6-(a) shows a user plane protocol stack of NR, and FIG. 6-(b) shows a control plane protocol stack of NR.

Hereinafter, a sidelink synchronization signal (SLSS) and synchronization information will be described.

The SLSS is an SL-specific sequence, and may include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, the UE may detect an initial signal and acquire synchronization using the S-PSS. For example, the UE may acquire detailed synchronization using the S-PSS and the S-SSS, and may detect a synchronization signal ID.

A physical sidelink broadcast channel (PSBCH) may be a (broadcast) channel on which basic (system) information that the UE needs to know first before transmission and reception of an SL signal is transmitted. For example, the basic information may include SLSS related information, a duplex mode (DM), time division duplex uplink/downlink (TDD UL/DL) configuration, resource pool related information, the type of an application related to the SLSS, a subframe offset, and broadcast information. For example, for evaluation of PSBCH performance, the payload size of PSBCH in NR V2X may be 56 bits including CRC of 24 bits.

The S-PSS, S-SSS, and PSBCH may be included in a block format (e.g., an SL synchronization signal (SS)/PSBCH block, hereinafter sidelink-synchronization signal block (S-SSB)) supporting periodic transmission. The S-SSB may have the same numerology (i.e., SCS and CP length) as a physical sidelink control channel (PSCCH)/physical sidelink shared channel (PSSCH) in the carrier, and the transmission bandwidth thereof may be within a (pre)set sidelink BWP (SL BWP). For example, the bandwidth of the S-SSB may be 11 resource blocks (RBs). For example, the PSBCH may span 11 RBs. The frequency position of the S-SSB may be (pre)set. Accordingly, the UE does not need to perform hypothesis detection at a frequency to discover the S-SSB in the carrier.

In the NR SL system, a plurality of numerologies having different SCSs and/or CP lengths may be supported. In this case, as the SCS increases, the length of the time resource in which the transmitting UE transmits the S-SSB may be shortened. Thereby, the coverage of the S-SSB may be narrowed. Accordingly, in order to guarantee the coverage of the S-SSB, the transmitting UE may transmit one or more S-SSBs to the receiving UE within one S-SSB transmission period according to the SCS. For example, the number of S-SSBs that the transmitting UE transmits to the receiving UE within one S-SSB transmission period may be pre-configured or configured for the transmitting UE. For example, the S-SSB transmission period may be 160 ms. For example, for all SCSs, the S-SSB transmission period of 160 ms may be supported.

For example, when the SCS is 15 kHz in FR1, the transmitting UE may transmit one or two S-SSBs to the receiving UE within one S-SSB transmission period. For example, when the SCS is 30 kHz in FR1, the transmitting UE may transmit one or two S-SSBs to the receiving UE within one S-SSB transmission period. For example, when the SCS is 60 kHz in FR1, the transmitting UE may transmit one, two, or four S-SSBs to the receiving UE within one S-SSB transmission period.

For example, when the SCS is 60 kHz in FR2, the transmitting UE may transmit 1, 2, 4, 8, 16 or 32 S-SSBs to the receiving UE within one S-SSB transmission period. For example, when SCS is 120 kHz in FR2, the transmitting UE may transmit 1, 2, 4, 8, 16, 32 or 64 S-SSBs to the receiving UE within one S-SSB transmission period.

When the SCS is 60 kHz, two types of CPs may be supported. In addition, the structure of the S-SSB transmitted from the transmitting UE to the receiving UE may depend on the CP type. For example, the CP type may be normal CP (NCP) or extended CP (ECP). Specifically, for example, when the CP type is NCP, the number of symbols to which the PSBCH is mapped in the S-SSB transmitted by the transmitting UE may be 9 or 8. On the other hand, for example, when the CP type is ECP, the number of symbols to which the PSBCH is mapped in the S-SSB transmitted by the transmitting UE may be 7 or 6. For example, the PSBCH may be mapped to the first symbol in the S-SSB transmitted by the transmitting UE. For example, upon receiving the S-SSB, the receiving UE may perform an automatic gain control (AGC) operation in the period of the first symbol for the S-SSB.

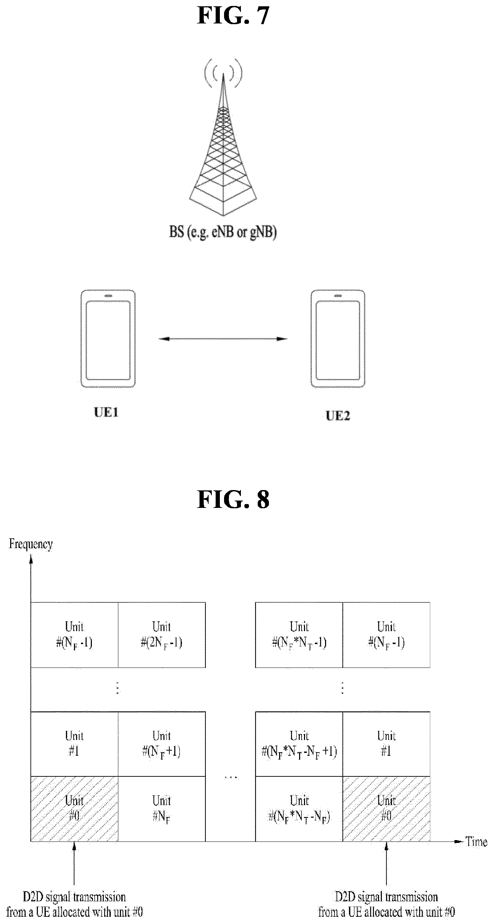

FIG. 7 illustrates UEs performing V2X or SL communication.

Referring to FIG. 7, in V2X or SL communication, the term UE may mainly refer to a user's UE. However, when network equipment such as a BS transmits and receives signals according to a communication scheme between UEs, the BS may also be regarded as a kind of UE. For example, UE 1 may be the first device 100, and UE 2 may be the second device 200.

For example, UE 1 may select a resource unit corresponding to a specific resource in a resource pool, which represents a set of resources. Then, UE 1 may transmit an SL signal through the resource unit. For example, UE 2, which is a receiving UE, may receive a configuration of a resource pool in which UE 1 may transmit a signal, and may detect a signal of UE 1 in the resource pool.

Here, when UE 1 is within the connection range of the BS, the BS may inform UE 1 of a resource pool. On the other hand, when the UE 1 is outside the connection range of the BS, another UE may inform UE 1 of the resource pool, or UE 1 may use a preconfigured resource pool.

In general, the resource pool may be composed of a plurality of resource units, and each UE may select one or multiple resource units and transmit an SL signal through the selected units.

FIG. 8 illustrates resource units for V2X or SL communication.

Referring to FIG. 8, the frequency resources of a resource pool may be divided into NF sets, and the time resources of the resource pool may be divided into NT sets. Accordingly, a total of NF * NT resource units may be defined in the resource pool. FIG. 8 shows an exemplary case where the resource pool is repeated with a periodicity of NT subframes.

As shown in FIG. 8, one resource unit (e.g., Unit #0) may appear periodically and repeatedly. Alternatively, in order to obtain a diversity effect in the time or frequency dimension, an index of a physical resource unit to which one logical resource unit is mapped may change in a predetermined pattern over time. In this structure of resource units, the resource pool may represent a set of resource units available to a UE which intends to transmit an SL signal.

Resource pools may be subdivided into several types. For example, according to the content in the SL signal transmitted in each resource pool, the resource pools may be divided as follows.

(1) Scheduling assignment (SA) may be a signal including information such as a position of a resource through which a transmitting UE transmits an SL data channel, a modulation and coding scheme (MCS) or multiple input multiple output (MIMO) transmission scheme required for demodulation of other data channels, and timing advance (TA). The SA may be multiplexed with SL data and transmitted through the same resource unit. In this case, an SA resource pool may represent a resource pool in which SA is multiplexed with SL data and transmitted. The SA may be referred to as an SL control channel.

(2) SL data channel (physical sidelink shared channel (PSSCH)) may be a resource pool through which the transmitting UE transmits user data. When the SA and SL data are multiplexed and transmitted together in the same resource unit, only the SL data channel except for the SA information may be transmitted in the resource pool for the SL data channel. In other words, resource elements (REs) used to transmit the SA information in individual resource units in the SA resource pool may still be used to transmit the SL data in the resource pool of the SL data channel. For example, the transmitting UE may map the PSSCH to consecutive PRBs and transmit the same.

(3) The discovery channel may be a resource pool used for the transmitting UE to transmit information such as the ID thereof. Through this channel, the transmitting UE may allow a neighboring UE to discover the transmitting UE.

Even when the SL signals described above have the same content, they may use different resource pools according to the transmission/reception properties of the SL signals. For example, even when the SL data channel or discovery message is the same among the signals, it may be classified into different resource pools according to determination of the SL signal transmission timing (e.g., transmission at the reception time of the synchronization reference signal or transmission by applying a predetermined TA at the reception time), a resource allocation scheme (e.g., the BS designates individual signal transmission resources to individual transmitting UEs or individual transmission UEs select individual signal transmission resources within the resource pool), signal format (e.g., the number of symbols occupied by each SL signal in a subframe, or the number of subframes used for transmission of one SL signal), signal strength from a BS, the strength of transmit power of an SL UE, and the like.

## Priority-based Distributed Data Processing

Object detection is a function of, when an input image is given, performing classification and localization for all categories existing in the image. This object detection function is installed in a smart CCTV or a smart RSU and used in regions requiring traffic safety, for example, for detecting and identifying moving pedestrians or vehicles through camera sensors, collecting vehicle driving information, or predicting collisions.

This object recognition function has recently been greatly improved in the performance of image analysis technology such as object and scene recognition due to the recent development of deep learning technology, and most technologies require a structure based on a high-performance GPU server application environment.

Deep learning-based object detection schemes are largely divided into a two-stage scheme and a single-stage scheme depending on their structures.

In the two-stage scheme, object detection is performed in two stages: a stage for detecting object candidate regions (regions of interest (ROIs)) in an image by selective search and a region proposal network, and a stage for performing class classification and bounding box regression on the detected candidates. A representative two-stage scheme is faster R-CNN.

In the single-stage scheme, object detection is performed with a single deep learning model that performs classification and bounding box regression directly from predefined anchor boxes without the stage of detecting object candidate regions. In the mobile and embedded fields, methods of the single-stage scheme are mainly used due to operating speed issues, and a representative single-stage scheme is You Only Look Once (YOLO).

For services based on a server application environment in a C-ITS system, the demand for optimization technology is increasing to reduce response latency because multiple servers are involved in object detection to endpoints, and service performance qualities (low response latency & low detection accuracy vs. high response latency & high detection accuracy) may be categorized according to service purposes so that a customer may select an optimization level.

A service response based on the server application environment in the C-ITS system is processed largely in three steps: "1. object detection & result analysis delivery, 2. requested service process delivery, and 3. service reception." There are exemplary structures such as Table 5, although they differ in service type and purpose. Table 5 illustrates CCTV- and RSU-related service server-infrastructures.

[Table 5]

| Case# | 1. Object Detection & Result Analysis Delivery | 2. Requested Service Process Delivery | 3. Service Reception |
|---|---|---|---|
| 1 | CCTV shooting/object recognition result (wired or wireless) | → LDM server (BSM/PSM message generation)- Soft RSU cloud server (cloud RSU) → Soft V2X server | SoftV2X terminal (smartphone) |
| 2 | CCTV shooting/object recognition result | → Soft RSU (BSM/PSM generation - wired or wireless) → SoftV2X server  *Depending on whether a camera is installed in the RSU, V2X message processing is selected from 1) server generation (camera installed) or 2) RSU generation (camera not installed) | SoftV2X terminal (smartphone) |
| 3 | CCTV shooting/object recognition result | video information storage and analysis (cloud) | service provision (smartphone) |
| 4 | CCTV shooting/object recognition result | video system (on-premise server) | remote monitoring (smartphone/PC) |

An object detection time may be affected by a function implementation method, the number of objects to be processed, the number of linked server points, and so on. However, as the number of objects to be processed with such attributes and data sizes increases, object detection data processing latency and traffic load will also increase. This may be overcome by optimizing the function implementation method or the number of linked server points, and various technologies are researched and developed to reduce the detection time for optimizing the function implementation method.

For object detection and scene segmentation to optimize a function implementation method, low latency, low power, and optimization of a computational amount are required, and for this purpose, the following requirements should be satisfied.

First, a feature extraction layer, which is used as a basic structure for extracting image features in a deep learning model, needs to be lightweight.

Second, optimization is required from the perspective of a deep learning model structure for object detection or object/scene segmentation. For example, for object detection, a structure for determining the location and type of an object needs to be lightweight, and for object/scene segmentation, a structure for segmentation needs to be lightweight. A time required for object detection in a typical actual service is 1 second or less, and for example, when video shooting and object recognition detection are processed in the same device, an object recognition detection time for one video frame may be about 200ms.

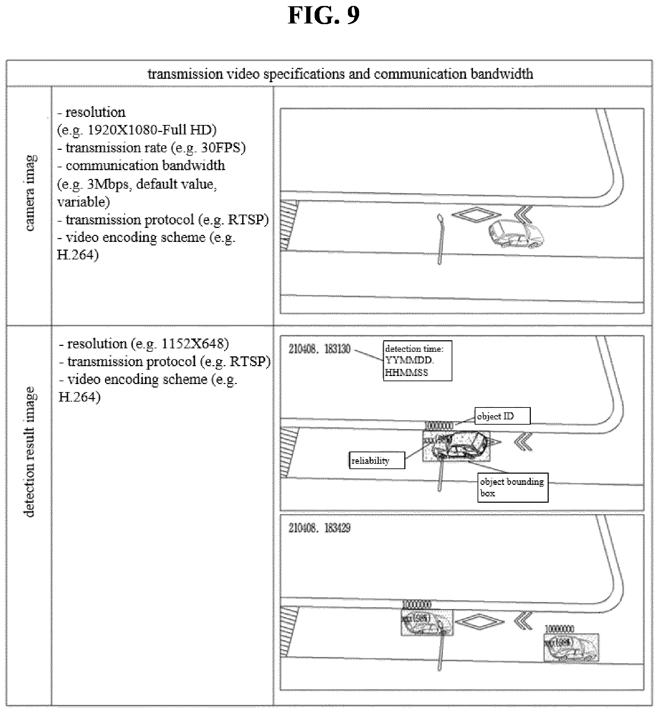

Further, when used in a typical traffic system or C-ITS, the object detection function should output detected data and a detected video, such as FIG. 9, from which time and physical property information about a detected object are determined, although it depends on an object detection implementation method. In conclusion, load factors that should be considered in a service using object detection in a typical ITS may include object detection latency, a detection data processing time, a data size, and a transmission bandwidth.

The types of data included in detection results may be identified from such an example as FIG. 9.

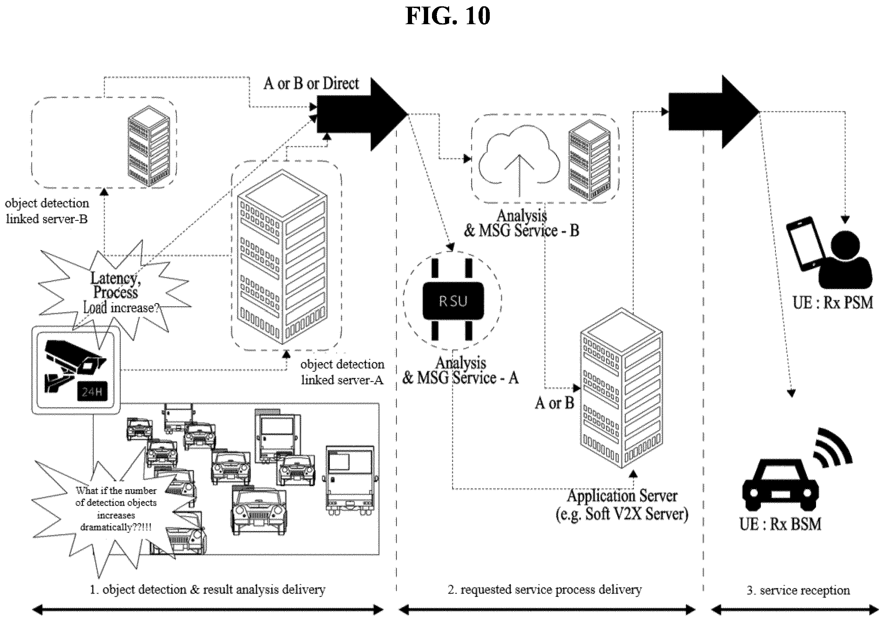

FIG. 10 illustrates an existing server-based object detection structure.

When a service using object detection is operated in an ITS environment such as FIG. 10, the object detection latency may be reduced to optimize the function implementation method. However, other load factors (a detection data processing time, a data size, and a transmission bandwidth) may not be resolved.

For example, when vehicles or pedestrians suddenly increase due to a specific event, the object detection latency has been optimized and improved, compared to the past, but detected data processing, and the transmission, size, and bandwidth of result data for an end user service increase proportionally, thereby increasing system load. This load may offset the optimization of the detection latency or may remain.

This problem may occur when implementing/operating a V2X service using the object detection function based on a server application environment, and may degrade the performance of the service and system. The problem may be solved by simple distributed processing using multiple servers and a load balancer (L4 or L7), but with a high cost.

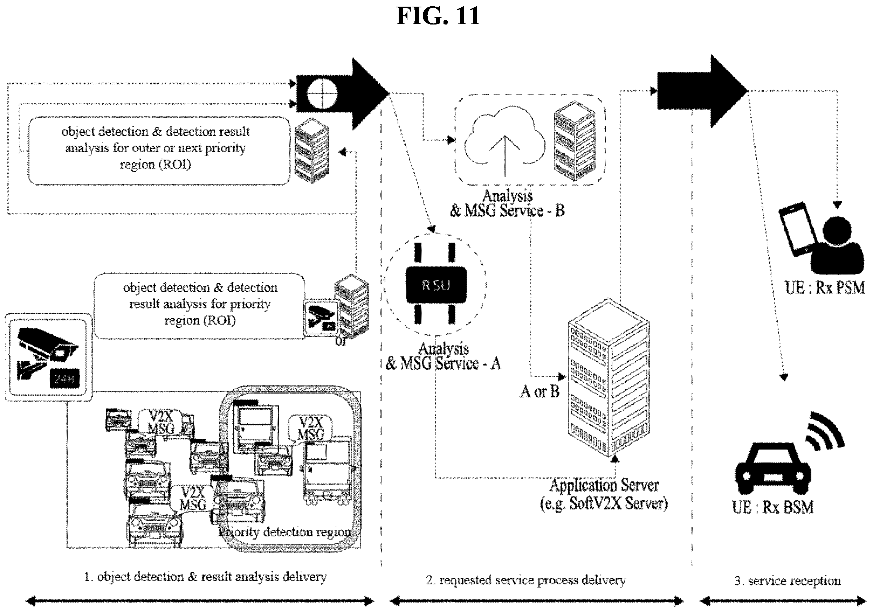

FIG. 11 illustrates an exemplary object detection structure according to an embodiment.

In an embodiment of the present disclosure, structures and operation methods are proposed for distributing a processing process for detecting computing resources based on priority conditions for regions and objects under various conditions in an object detection processing process led/executed by an RSU or a system linked to the RSU in a V2X environment.

In the above environment, the object detection priority conditions may include whether a V2X message is transmittable/receivable in an object region, the importance of a region object, uniformly segmented regions within an image frame, an important detection region, and whether there is an effective V2X reception region.

The proposed methods may distribute a processing process and order of computing resources for object detection, thereby reducing load or improving performance.

In the case where an intelligent CCTV or RSU capable of video sensing object detection in an intelligent transportation system (ITS) or cooperative-ITS (C-ITS) processes a moving object detection function in conjunction with a surrounding smart RSU or server, a method is proposed to enable efficient processing of computing resources in a situation where a processing volume increases due to an increase in the number of detected objects or there are objects that require detection with priority.

In the case of object detection by uniformly segmenting the region of an image frame, objects in a segmented region with priority may be detected by segmenting each processing computing resource, and in the case of object detection using a V2X message, object detection may be performed by segmenting a region and each processing computing resource based on whether information about the location, movement, and state of an acquired object (vehicle, pedestrian, or the like) matches information detected in a region set based on the information.

In the case of object detection using information about important detection regions (i.e., around a road, around a direction of intersection entry, around the center of an intersection, around a bicycle road, and a blind spot) within a detection image frame, object detection may be processed in computing resources divided for corresponding regions according to their priorities. In the case of object detection based on an effective V2X reception region, detection may be performed in the form of a computing resource structure, such that a region, which has been set according to the possibility of existence of an effective V2X reception region based on detection object information for a terrain feature around a moving space by tracking information about the location, movement, and state of an object, is detected first, accompanied by detection of the remaining regions.

When a detecting entity or target system determines that the importance of objects expected to be detected in a corresponding region is low in all of the above object detection situations, it may skip or drop the detection of some objects.

In order to improve the object detection processing efficiency of computing resources based on the determination of a situation/condition in which the detecting entity is placed, the detecting entity may perform a detection process by combining two or more of the listed priority conditions.

For example, when a ratio difference between the numbers of detected objects that are processed in a distributed manner based on the condition of whether an object region supports a V2X message is so large as to exceed a threshold that requires distributed processing, an image region may be segmented into uniform regions, and object detection may be processed in each separate computing resource, rather than based on whether V2X information and object detection information match.

## 1. Object Detection Requirements

### 1.1 Sensing-related

An object detection entity (e.g. CCTV, RSU, or the like) should be able to detect regions with detection priority regardless of whether objects support V2X communication. In the case of an object supporting V2X communication, it should be located in a cover region where it may sense information about the location, movement, and state of an object (e.g. VRU or vehicle) that transmitted a received V2X message, and a specific distance around it. The V2X message may be collected through a long-range (e.g. Uu or IF) communication scheme as well as a short-range (e.g. DSRC or PC5) communication scheme, in the cover region.

The object detection entity may use a detected location or installed location as a reference point for relative positioning, and when an object is detected from data of a sensor installed in the object detection entity, the relative position of the object may be identified through preset information.

In the same sense, information about the relative position of the object may be obtained by combining the position of the reference point with the information about the relative position of the object. Recognition information and movement attribute information about the object may be detected by comparing the similarity between movement attribute information about the object detected and obtained in this way and movement attribute information about the object received through a V2X message.

In the case of an object that is not capable of supporting V2X communication, the detection system should be able to detect information about the type, location, size, and direction of the object within an image/video, and the surroundings at a specific distance from the object by combining a detection algorithm of the detection system with relative position information such as the example mentioned above.

The present disclosure does not specify an object detection technique or algorithm, and proposes a method applicable to a structure that processes object detection based on or linked to an existing server application environment. During object detection, there are two regions, one of which needs to be detected first and the other of which needs to be detected second in a process of searching object candidate regions (ROIs) in an image region according to a distributed processing mode proposed in the disclosure. Accordingly, object detection should be performed by dividing computing resources according to the priorities of required regions.

In the above process, an object may not be detected well at a specific point or region in an image, making it meaningless to attempt image detection or generating incorrect detection results. For example, when an object supporting V2X communication transmits a V2X message at a specific location but is occluded by an obstacle, an (related or matching) image of the object may not be detected for a specific time period. When this phenomenon continues to occur in the same region due to multiple objects supporting V2X communication, the region may be determined as an undetectable region. More specifically, when a specific number (e.g. 100) of or more different objects are detected (or passed) at a specific point or region, and a specific percentage (e.g. 90%) or more of image detection (bounding box generation for an image of a related object) fails, this is recognized as a situation in which image detection is not possible in the region.

The above point or region information may be collected to form a specific undetectable/excluded region within the coverage region of a camera sensor. This undetectable/excluded region may be set to a lowest detection priority, and the detection of the region with the corresponding priority may be skipped or dropped, for processing efficiency.

This undetectable/excluded region may be partially or wholly changed again to be detectable, when detection obstacles are removed (e.g. structures or terrain features are removed or modified) or for other reasons. This may not be information that is updated in real time over a short period of time, but information that changes over a long period of time. As described above, information about a change in the undetectable/excluded region should be reflected to determine whether to perform detection, a detection priority, and so on. In addition, even in a region which has a very low detection priority and thus is excluded from detection, intermittent detection may be attempted to identify a change, or a detection test may be performed during management or calibration of an RSU CCTV/camera sensor.

For example, when a detection-excluded region as described above is configured to be subject to a detection attempt in order to identify an update state periodically every T time (e.g. T=1), it may be identified whether an image related to corresponding objects (UEs) is detected while waiting for a specific time period until a specific number (e.g. k=10) of objects (UEs) occur every period (e.g. t0 + mT where m is an integer greater than 0) based on the start time (e.g. t0) of the corresponding operation. In this process, updated region information is reflected in the next operation, and from then on, image detection is attempted in a new region configuration and priority setting state.

When the detection entity or target system determines that the importance of objects expected to be detected in a detection region is low, it may skip or drop the detection of some objects. For example, in the case where it is necessary to continuously track and update information about objects already detected, rather than detecting a specific region, or to maintain detection on the assumption of the same attribute information, when it is determined that an object has a low importance, detection may no longer be performed, or the priority of detection may be lowered for a region where many of these objects are distributed, for the efficiency of the distributed computing structure.

1.2 V2X message-related

When an object detection entity capable of performing an object detection function receives a V2X message of a V2X transmitting or receiving terminal object supporting V2X communication from the surroundings, the message should include physical attribute information (e.g., the position, speed, direction, vehicle length, vehicle width, and so on of a moving vehicle) among essential data fields that should be transmitted.

The physical attribute information may be detected as having the same information values during execution of the object detection function and compared with the information detected from the message to identify a similarity between them.

The V2X transmitting or receiving terminal refers to a terminal that transmits or receives a message in specific V2X use cases (e.g., basic safety, sensor sharing, maneuver coordination, and so on) including V2X use cases described below. When operating in multiple use cases, even the same terminal may perform a different transmission/reception operation in each use case.

The similarity between physical attribute information about an object, detected from the two paths of message reception and remote sensing object detection may be analyzed. When the physical attribute information is determined to be similar, the process proceeds to a detection result data generation & transmission process, whereas when it is determined to be not similar, a re-detection opportunity may be added and a comparison may be performed again. However, when an object recognition re-detection opportunity is added every time an error occurs, latency may occur as much, which should also be considered in an overall processing time.

The object detection time varies depending on the number of detection objects, an applied object detection algorithm, and HW performance. However, the evaluation target detection time set in a research project related to mobile object detection (urban road autonomous cooperative driving safety & infrastructure research project, development of technology to collect information about mobile object at intersection/evaluation of mobile object detection performance) is 200ms, which means that even allowing a few re-detections may be expected to cause a latency of several hundred milliseconds to several seconds.

In this method, when the comparison between a detection result of movement information about an object supporting V2X communication and a V2X message fails, only up to one re-detection is allowed, thereby minimizing the latency caused by errors in the analysis process and results. When the result of comparing a movement information detection result and a V2X message of the object fails even after the re-detection, only a matching result is processed as an object detection result, and a matching failure result is considered as an object that does not support V2X communication. However, a maximum allowed number of times may be changed depending on a latency error value allowed by the given system, and in a situation for increasing a detection accuracy rather than transmitting a detection result in real time, the number of allowed re-detections may be increased within a maximum latency value.

### 2. Proposed Structure & Method for Distributed Object Detection Processing

#### 2.1 V2X message-based distributed mode

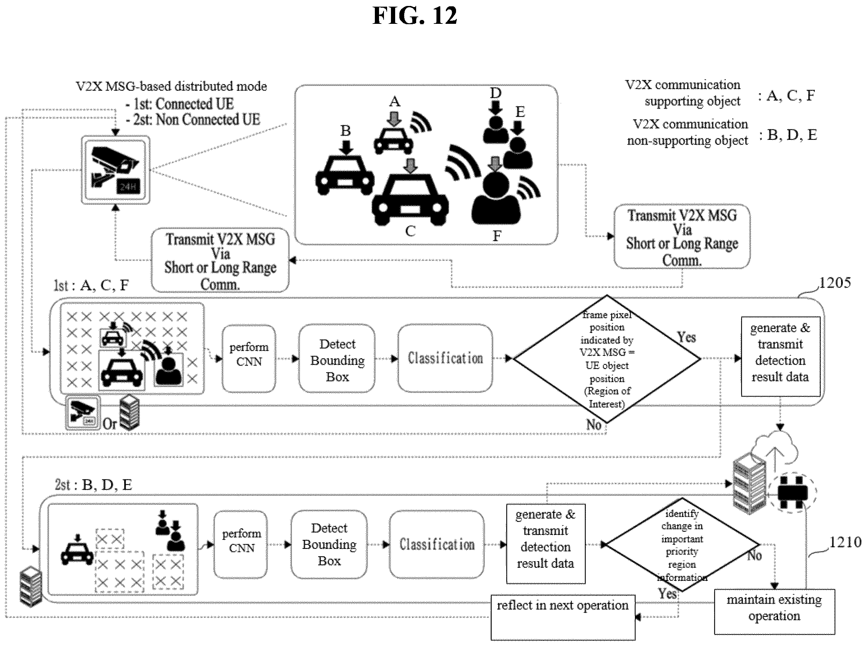

FIG. 12 is a diagram illustrating a V2X message-based distributed mode.

In the V2X message-based distributed mode, detection is performed in an object region in which a V2X message is transmittable/receivable with priority, in order to improve the performance of detecting an object supporting V2X communication, and a result is transmitted to a server which will use the detection information. Subsequently, raw data related to the detection and analysis result is transmitted to computing resources that process the detection of the remaining object regions.

The object detection entity distinguishes a V2X communication supporting object from a non-V2X communication supporting object by determining a matching level between information about the location and movement of an object in a received V2X message and information about a sensed location and movement of the object in an image. The object detection entity detects an object supporting V2X communication with priority (1205). Then, the remaining objects determined as non-V2X communication supporting objects in a region are detected through distributed computing resources, and result data is transmitted to the server which will use the result data (1210).

#### 2.2 Uniformly segmented image region-based distributed mode

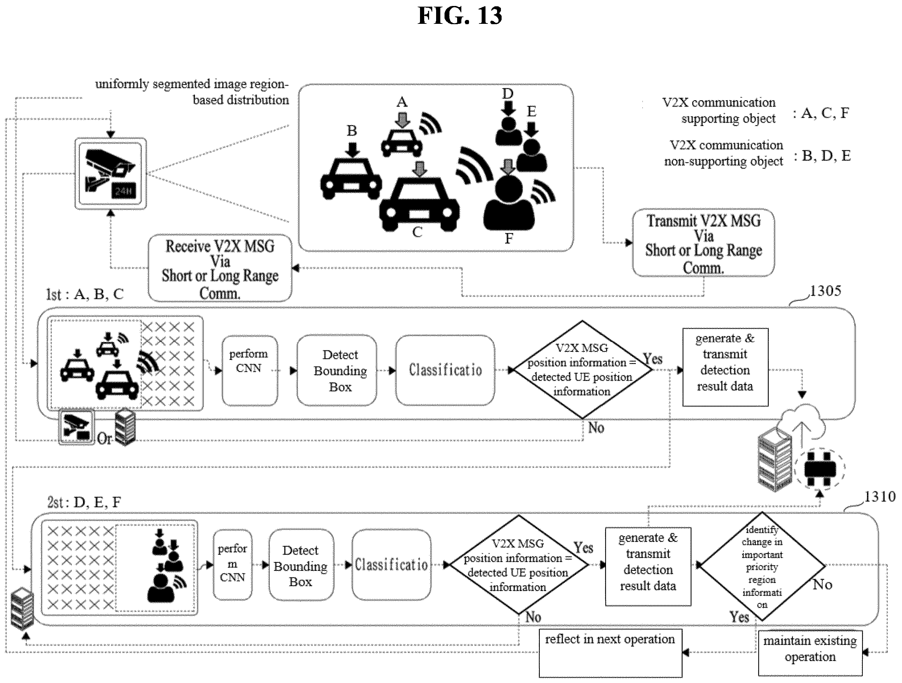

FIG. 13 is a diagram illustrating an image region-based distributed mode.

In the uniformly segmented image region-based mode, a detection region is segmented to distribute distributed processing for detection as uniformly as possible. The details of the image region segmentation method are not specified in the present disclosure, but the image region should be segmented such that objects may be displayed as uniformly as possible. For example, half division or grid division may be used. In this process, the region is segmented uniformly and a priority is assigned to each region. Then, an object is detected first in a segmented region with a higher priority and a detection result is transmitted to the server which will use the detection information (1305). Subsequently, data related to the detection and analysis result is transmitted to computing resources that process the detection of the remaining object regions. Then, objects in the remaining regions are detected through distributed individual computing resources, and result data is transmitted to the server which will use the result data (1310).

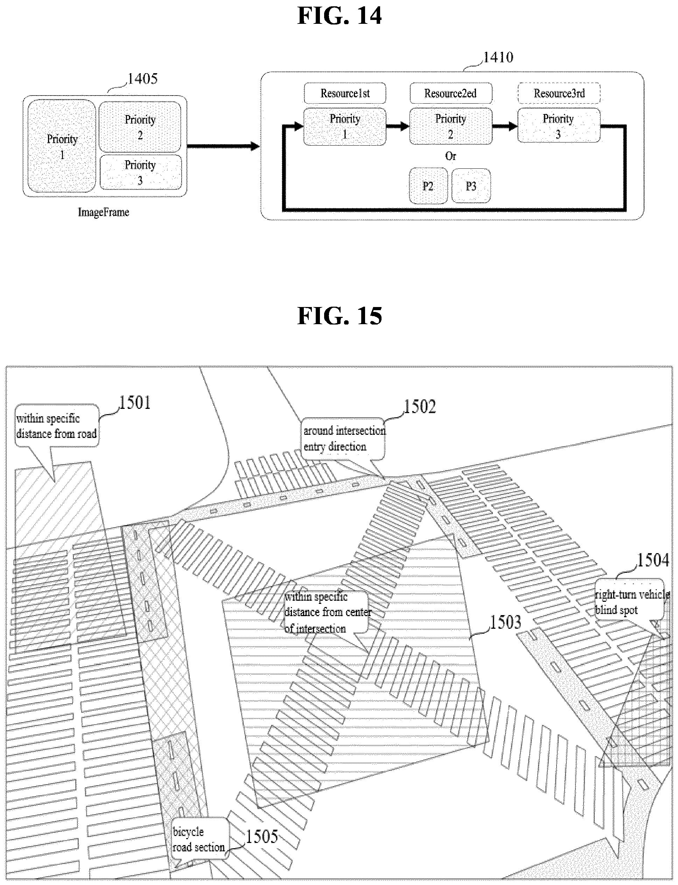

The object detection entity should be able to perform detection in a detection region, regardless of the number of priority regions and the number of distributed computing resources. For example, among the computing resources that process object detection, an $N^{th}$ system processes a detection region with a highest $N^{th}$ priority, and then an $(N+1)^{th}$ system processes a detection region with an $(N+1)^{th}$ priority. However, in the absence of an $(N+2)^{th}$ system to process an $(N+2)^{th}$ priority region, the $(N+1)^{th}$ system should be able to process both regions with the $(N+1)^{th}$ and $(N+2)^{th}$ priorities. This processing order logic may be changed to be optimized according to a server infrastructure resource operation method or an operating environment condition from an implementation perspective, and even when information about an important priority region is changed, it should be reflected in the detection function or process. FIG. 14 illustrates such resource distribution in a distributed mode.

2.3 Distributed mode based on important region first

In the distributed mode based on an important region first, when there is important detection region information which is predefined and preserved by an object detection entity or which is requested after direct analysis or analysis of another system, the computing resources may be distributed and processed by classifying the information according to priorities. FIG. 15 illustrates an example of an important priority detection region. Examples of the important detection region include a region 1501 around a road within a specific distance, a region 1502 around an intersection entry direction, a region 1503 within a specific distance from the center of an intersection, a region 1505 around a bicycle road, a blind spot 1504 in a specific direction, an accident-prone region (not shown), and a lane merging/branching section (not shown), which are places where information needs to be collected primarily within a range requiring detection. The important detection region may be set and updated based on an actual traffic volume, a traffic trajectory, and the frequency of accident/emergency situations.

In this process, objects in a high-priority important region are first detected, and a result is transmitted to a server which will use the detection information. Subsequently, data related to the detection and analysis result is transmitted to computing resources that process the detection of the remaining object regions. Then, for objects in the remaining regions, a detection process is processed through distributed individual computing resources, and result data is transmitted to the server which will use it.

For example, in FIG. 15, in the absence of previous detection results, vehicles approaching the center of an intersection may become new detection target objects, and for vehicles that do not approach the intersection but travel in other directions (e.g., right turn, U-turn, and so on), the detection may be skipped or dropped without a new detection attempt despite the absence of previous detection results, when no separate important region is detected in the directions.

Further, when detected objects continue to stay in an important region or continue to move to an adjacent important region, the objects detected in the high-priority important region may be tracked first, just as the objects in the high-priority important region are detected first. On the other hand, when the detected objects move from the above-mentioned important region to a region with a lower importance/detection (and/or tracking) priority or risk, the tracking of the detected objects may be performed later or may be skipped or dropped.

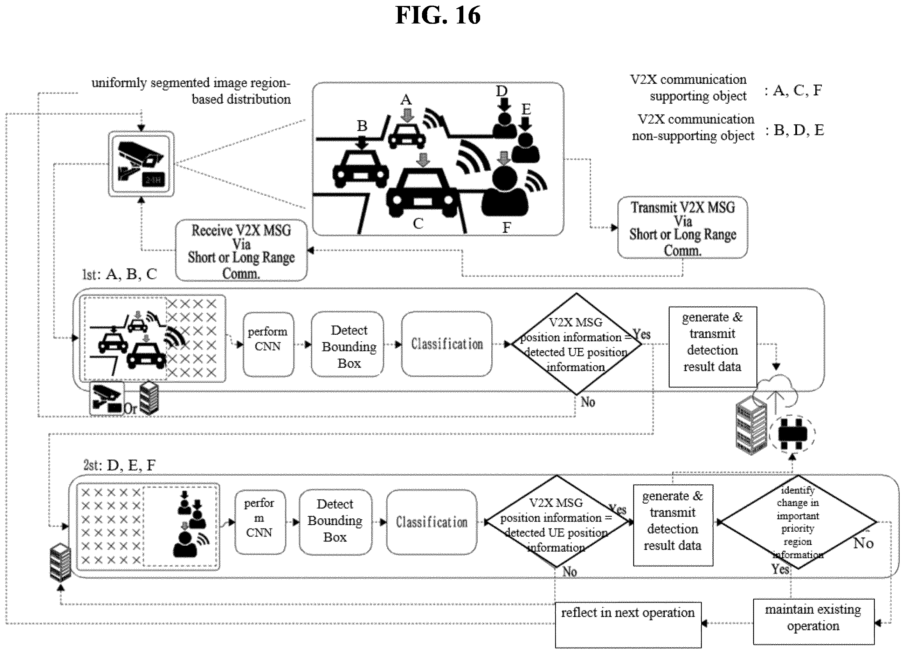

FIG. 16 is a diagram illustrating an important region-based distributed mode.

FIG. 16 illustrates a process of detecting a region, for example, objects within a specific distance of the center of an intersection in an image frame. In this method, similar to the uniformly segmented image region-based distributed mode, computing resources should be distributed in order based on important detection region information, so that detected objects may be processed, and an exemplary computing resource allocation processing process in the uniformly segmented image region-based distributed mode illustrated in FIG. 14 may also be applied in the same manner. A basic configuration and operation method for processing important region-based object detection in a distributed manner should include operations described in Table 6 below. Table 6 illustrates an object detection distributed computing operation method on an important region priority basis.

[Table 6]

| # | Entity | Important Region-based Distributed Mode |
|---|---|---|
| 1 | Object detection entity (CCTV, RSU, etc.) | 1. Search UE & non-UE object candidate regions (ROIs) in highest-priority important region that has been preset or changed or requested. |
| | | 2. Classification and bounding box regression are performed on detected candidates. |
| | | 3. It is determined whether movement information in received V2X message of UE matches UE image |
| | | 4. Upon completion of matching determination, detected region result is transmitted to distributed object detection server and object detection is requested for the remaining segmented image regions. (Matching-failed UE pixel region information is processed as Non-UE) |
| | | If matching fails, segmented region object detection may be restarted. |
| | | 5. Segmented region UE+Non-UE detection result data is generated & transmitted. |
| | Distributed server-B | 6. Then, search in UE & Non-UE object candidate regions (ROIs) in priority region or remaining region detected above. |
| | | 7. Classification and bounding box regression are performed on detected candidates. |

(continued)

| # | Entity | Important Region-based Distributed Mode |
|---|--------|------------------------------------------|
| | | 8. It is determined whether movement information in received UE21 V2X message matches UE image. |
| | | 9. Upon completion of matching determination, segmented region UE+Non-UE detection result data is generated & transmitted. (matching-failed UE pixel region information is processed as Non-UE) |
| | | If matching fails, segmented region object detection may be restarted. 10. Change in information related to important priority region is identified. When there are no changes, the current operation is maintained. When there is a change, it is reflected in the detection process. |
| 2 | Object detection entity (CCTV, RSU, etc.) | The same as processing process of object detection entity of #1 |
| | Distributed server-B | The same as processing process of object distributed server-B of #1 |

### 2.4 Distributed mode based on valid V2X reception region first

In '2.1 V2X message-based distributed mode', when detecting a user for which both sensor information and message information are available, the detection performance may be improved. Accordingly, the method of detecting such users first or detecting and processing them separately from users that do not in a distributed manner has been described.

In '2.2 Uniformly segmented image region-based distributed mode', the method of segmenting a detection region has been described in order to process user detection as uniformly as possible, when the user detection is processed in a distributed manner, using different computing resources (i.e., with the same importance and priority for 1st and 2nd computing resources).

In '2.3 Distributed mode based on important region first', when the importance of specific regions is known (or measured or estimated), detection is performed first for an important region, so that main QoS (e.g., latency and throughput) between links requiring connectivity may be ensured, while the use of limited computing resources is optimized.

In a method such as '2.3 Distributed mode based on important region first', there may also be a region that is irrelevant to a user supporting V2X functions within a specific important region. For example, in a basic safety-related use case in which a dangerous situation may be recognized and a user may be warned by receiving BSM and PSM information, there is no need to receive a message from an object existing in a range irrelevant to the safety of a user from which a V2X message is received, or a message for an event that has occurred in the range. Therefore, it may be more useful to perform detection first for regions that are relevant to V2X users, that is, regions within a valid reception range of V2X users.

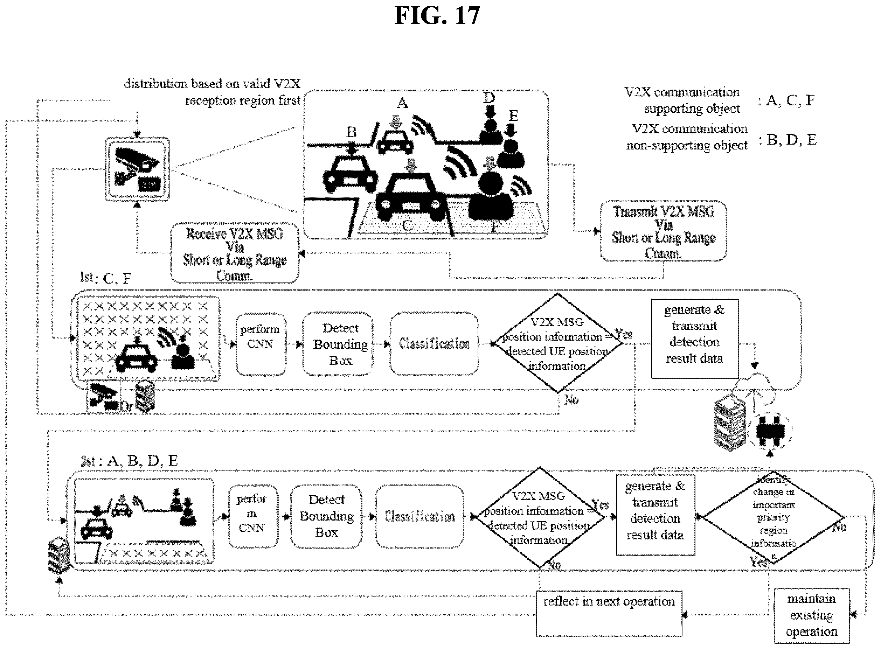

FIG. 17 illustrates an example of performing detection for a valid V2X reception region first.

When detection is performed first for a valid V2X service region, a priority detection region (e.g., a region with high risk factors in an expected movement path and surrounding region of a V2X terminal) and a later detection region or a region for which detection is to be dropped/skipped (e.g., a region where a V2X terminal has already passed, or a region with very low or no risk factors in terms of movement speed, direction, and time to collision (TTC) in an expected movement path and surrounding region of the V2X terminal) may be determined by tracking movement and status information of V2X receiving terminals, based on the locations of the V2X receiving terminals. In this way, detection may be performed separately in the form of a computing resource structure, such that detection is performed first for a region set as the priority detection region, accompanied by, if necessary, detection of the remaining regions (which may be skipped or dropped).

The method of performing detection first, for example, for a region corresponding to a valid reception range of V2X users has been described above. Detection may also be performed first for a region corresponding to a valid transmission range of V2X users in the same or similar manner.

For example, when a V2X user requests maneuver coordination by transmitting a maneuver coordination request message to perform a desired action (e.g. lane change, road merge, or overtaking), an RSU sensor may need to preferentially detect objects within an effective transmission range of V2X transmitting terminals, and there is no need to preferentially perform detection for a path or region that has already been passed.

In use cases requiring interaction between V2X terminals, including maneuver coordination, a specific V2X terminal may become a transmitting terminal or a receiving terminal depending on a message transmission/reception state. Accordingly, in the case where a specific terminal may be a transmitting terminal/receiving terminal depending on the situation or where mutual message exchange is required between terminals, a priority detection region may be set by considering an effective transmission range and an effective reception range of each terminal, selectively or both. For example, when terminal 1 is in a transmitting state and terminal 2 is in a receiving state, the effective transmitting range (i.e. range 1) of terminal 1 and the effective receiving range (i.e. range 2) of terminal 2 may be considered. Herein, terminal 2 may be in range 1 and terminal 1 may be in range 2. Generally, when terminals 1 and 2 have the same terminal capability (e.g., may perform a specific use case of Day-2 advanced safety) and the same main parameters (e.g., bandwidth and transmission power), range 1 and range 2 may be the same.

In this process, a valid V2X service region is to be set by tracking based on information which has been detected by using an algorithm or a transmitted V2X message to detect a valid region of objects, detection is to be performed by determining whether to perform detection, and a result is to be transmitted to a server which will use the detection information. For example, when the location of a tracked object is in a region where detection is unnecessary, or when there are no objects to receive a V2X message transmitted by the object, it should be possible to determine that it is invalid and end the detection process or detect the validity of another object. Subsequently, the function of transmitting data related to a detection and analysis result to computing resources that process detection in the remaining object regions is performed. Herein, a 1st detection entity may operate to maintain the connectivity of a valid region by transmitting information about the remaining object regions or a valid region with the next priority according to its determination.

Then, the detection process is performed for objects in the remaining regions or the valid region with the next priority through distributed individual computing resources, and result data is transmitted to the server which will use it.

2.5. Distributed mode based on priority combination

The above proposed structure that processes detection based on a priority condition using sensing & V2X message fusion, a uniformly segmented image region-based priority, an important detection region information-based priority, or a valid V2X reception region-based priority may also be applied in various ways by combining two or more priorities.

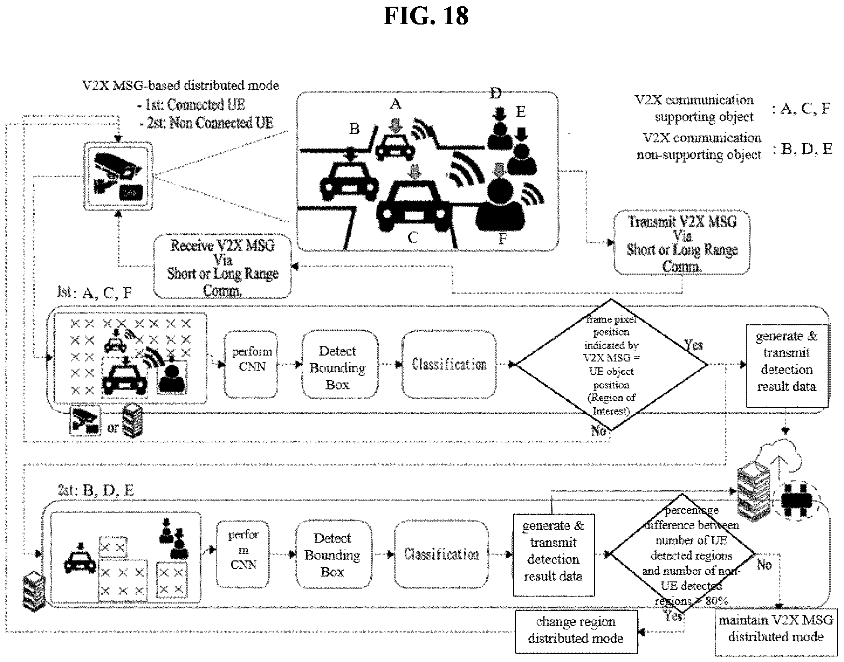

FIG. 18 illustrates an operation of a distributed mode based on a priority combination - V2X message & uniform image region.

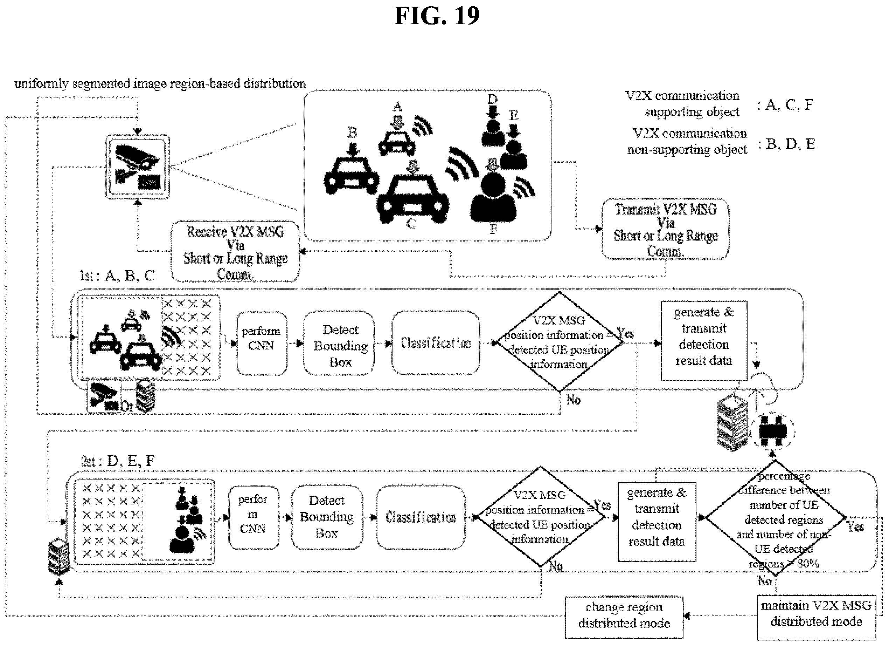

FIG. 19 illustrates an operation of a distributed mode based on a priority combination - uniform image region & V2X message.

For example, a mutually complementary distributed processing structure may be created by combining a V2X message supportable object region condition and a uniform image region condition. First, a detection process is started in the V2X message-based distributed mode, and results are identified using computing resources for detecting each object. When the sum of the number of detected V2X communication-supporting objects and the number of detected non-V2X communication supporting objects in an entire image frame exceeds a threshold (e.g. 20) requiring distributed processing, and when the percentage difference between the two values is equal to or greater than a specific threshold (e.g. 80%), object detection is processed by distributing servers based on uniform region segmentation of the image frame, not in the sensing-V2X message fusion-based mode.

Thereafter, when the percentage difference between the two values continues to be equal to or greater than the threshold, it means that the number of objects capable of using V2X service is very small relative to the number of non-supporting objects, or the number of non-supporting objects is very large relative to the number of V2X communication-supporting objects. Therefore, the image region segmentation-based mode is maintained. However, when this difference decreases to or below the threshold, the sensing-V2X message fusion-based mode is switched to, for processing. The above percentage difference is based on dividing an absolute difference by an average, and the order of the two values that are calculated is not important in the percentage error.

Equation 1 is a percentage error rate calculation formula.

[Equation 1]

$$\% \text{ difference} = \frac{|value1 - value2|}{(value1+value2)/2} \times 100\%$$

A basic configuration and operation method for processing object detection in a distributed manner based on this priority combination may include operations described in Table 7 below.

Table 7 illustrates an operation method of a distributed mode based on a priority combination (V2X message & image region).

[Table 7]

| # | Entity | V2X message-based distributed mode | Image region-based distributed mode |
|---|--------|-----------------------------------|--------------------------------------|
| 1 | Object detection entity (CCTV, RSU, etc.) | 1. Search UE object candidate region (ROI) in image region for location information in received V2X message transmitted by UE | 1. In preset segmented image region,search UE & Non-UE object candidate regions (ROIs) |
| | | 2. Perform class classification and bounding box regression on detected candidates | 2. Perform class classification and bounding box regression on detected candidates |
| | | 3. Determine whether movement information in received V2X transmission message of UE matches UE image | 3. Determine whether movement information in received V2X transmission message of UE matches UE image |
| | | 4. Upon completion of matching determination, transmit matched UE pixel region to object detection distributed server and request Non-UE object detection (matching-failed UE pixel region information excluded) If matching fails, UE object detection may be restarted | 4. Upon completion of matching determination, transmit detected region results to object detection distributed server and request object detection in remaining segmented image regions<br><br>(Matching-failed UE pixel region information is processed as Non-UE) If matching fails, segmented region object detection may be restarted |
| | | 5. generate & transmit UE detection result data | 5. Generate & transmit UE+Non4JE detection results in segmented region |

(continued)

| # | Entity | V2X message-based distributed mode | Image region-based distributed mode |
|---|---|---|---|
| | Distributed server-B | 6. Search Non-UE object candidate regions (ROIs) in image region excluding UE pixel region | 6. In remaining segmented image region, search UE&NorMJE object candidate regions (ROIs) |
| | | 7. Perform class classification and bounding box regression on detected candidates | 7. Perform class classification and bounding box regression on detected candidates |
| | | 8. Generate & transmit Non-UE detection result data | 8. Determine whether movement information in received V2X transmission message of UE matches UE image |
| | | 9. Compare percentage difference between the number of detected UEs and the number of detected Non-UEs. If it is equal to or greater than specific ratio, switch to region distributed mode, and if it is equal to or less than specific ratio, maintain the mode. | 9. Upon completion of matching determination, generate & transmit segmented region UE+Non-UE detection result data |
| | | | (Matching-failed UE pixel region information is processed as Non-UE) If matching fails, segmented region object detection may be restarted |
| | | | 10. Compare percentage difference between the number of detected UEs and the number of detected Non-UEs. If it is equal to or greater than specific ratio, switch to server distributed mode, and if it is equal to or less than specific ratio, maintain the mode. |
| 2 | Object detection entity (CCTV, RSU, etc.) | 1. transmit received V2X transmission message of UE and video image, and request UE object detection | |
| | Distributed server-A | The same as processing process of object detection entity of #1 | |
| | Distributed server -B | The same as processing process of object distributed server of #1 | |

In a situation where a CCTV or RSU equipped with an object detection function for the purpose of a specific service based on a server application environment is installed in a cellular-based ITS environment, when the number of detected objects increases due to an unexpected event, affecting the service quality or causing a failure, or when unnecessary object detection processing needs to be efficient, changing a distributed computing structure using external control equipment such as a load balancer to solve these problems may incur a significant cost. When even a double structure for stability is considered based on this, the cost may also be significant.

The disclosure has proposed a structure and method for distributing and balancing the load of object detection based on object detection priority conditions using a small number of computing resources. Therefore, a service that is easy to maintain at a low cost may be implemented.

As described above, the disclosure has proposed a structure and operation method for distributing a process of processing computing resources for detection based on priority conditions for regions and objects of various conditions in an object detection processing process led/executed by an RSU or its associated system in a V2X environment. In the above environment, the object detection priority conditions for various purposes may include whether a V2X message is transmittable/receivable in an object region, the importance of a region object, uniformly segmented regions within an image frame, an important detection region, and the presence or absence of a valid V2X reception region.

In the case of detection in uniformly segmented regions within an image frame, objects may be detected in a segmented region with priority by distinguishing each processing computing resource. In the case of V2X message-based detection, detection may be performed by distinguishing a region and each processing computing resource, based on whether information about the location, movement, and state of an obtained object (vehicle or pedestrian) matches information detected in a region set based on the information. In the case of detection using information about important detection regions (i.e., around a road, around an intersection entry direction, around the center of an intersection, around a bicycle road, a blind spot, and so on) within a detection image frame, object detection may be processed in each distinguished computing resource according to the priorities of regions. In the case of detection based on a valid V2X reception region first, detection may be performed separately in a computing resource structure such that a region, which has been set based on whether a valid V2X reception region exists based on object information detected from the terrain around a movement space by tracking information about the location, movement, and state of an object, is detected first, accompanied by processing of the remaining regions.

When the entity or target system performing detection determines that the importance of objects expected to be detected in a corresponding region is low for all of the above object detection situations, it may skip or drop the detection of some objects.

The detection process may be performed by combining two or more of the listed priority conditions to improve the object detection processing efficiency of computing resources based on determination of a situation/condition in which the entity performing detection is placed.

For example, when the ratio difference between the numbers of detected objects processed in a distributed manner based on the condition of whether a V2X message is supported in an object region is so large as to exceed a threshold requiring distributed processing, object detection may be processed in each divided computing resource by segmenting an image region into equal regions, rather than whether V2X information matches object detection information.

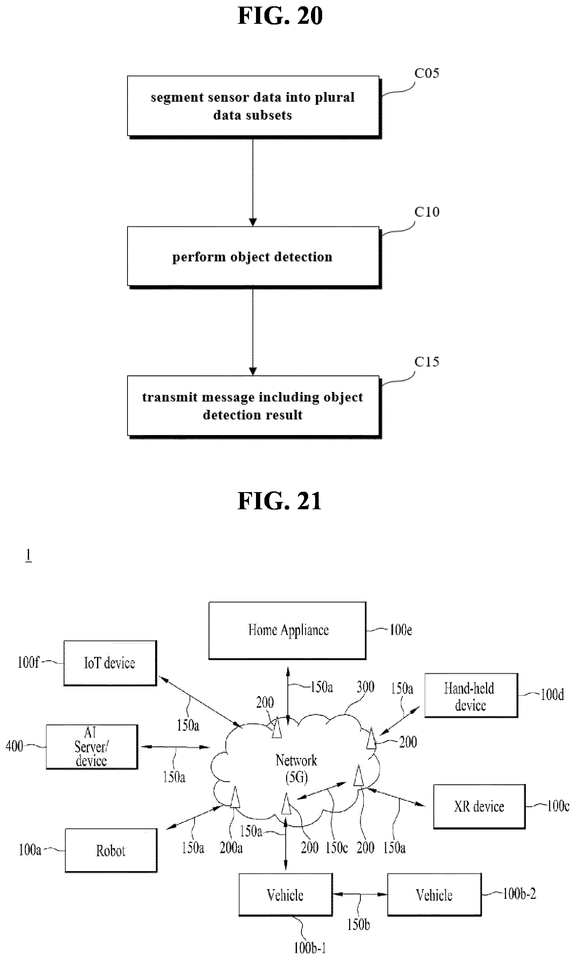

FIG. 20 is a flowchart illustrating a method of transmitting information about object detection by a device in an ITS according to one embodiment.

Referring to FIG. 20, the device may segment sensor data for objects into a plurality of data subsets (C05).

The device may perform object detection for at least one of the plurality of data subsets (C10).

The device may transmit a message including a result of the object detection (C15).

A priority related to the object detection may be set for each data subset. The device may perform object detection for a first data subset before a second data subset, based on the first data subset having a higher priority than the second data subset.

A result of the object detection for the first data subset may be transmitted before that of the second data subset.

The plurality of data subsets may be related to different physical regions. The priority may be determined based on a predefined importance for a corresponding physical region.

The priority may be determined based on whether V2X communication is supported in the physical region.

The priority may be determined based on V2X communication with an object included in the corresponding data subset. A data subset for objects capable of exchanging V2X messages with the device may have a higher priority than a data subset for objects not capable of exchanging V2X messages with the device.

The device may obtain sensor data for the objects through at least one sensor.

The sensor data may include an image of the objects.

The message may be a sensor data sharing message (SDSM) transmitted through wireless communication.

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

FIG. 21 illustrates a communication system applied to the present disclosure.

Referring to FIG. 21, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

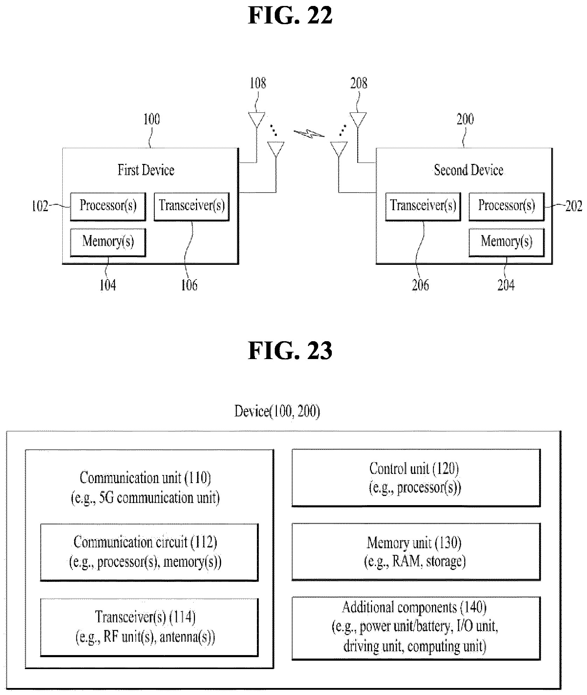

FIG. 22 illustrates a wireless device applicable to the present disclosure.

Referring to FIG. 22, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 21.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

Specifically, a UE may include the processor(s) 102 connected to the RF transceiver and the memory(s) 104. The memory(s) 104 may include at least one program for performing operations related to the embodiments described above with reference to FIGS. 11 to 27.

Alternatively, a chipset including the processor(s) 102 and memory(s) 104 may be configured. The chipset may include: at least one processor; and at least one memory operably connected to the at least one processor and configured to, when executed, cause the at least one processor to perform operations.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 23 illustrates another example of a wireless device applied to the present disclosure. The wireless device may be implemented in various forms according to a use-case/service (refer to FIG. 21)

Referring to FIG. 23, wireless devices 100 and 200 may correspond to the wireless devices 100 and 200 of FIG. 22 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 22. For example, the transceiver(s) 114 may include the one or more transceivers 106 and 206 and/or the one or more antennas 108 and 208 of FIG. 22. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 21), the vehicles (100b-1 and 100b-2 of FIG. 21), the XR device (100c of FIG. 21), the hand-held device (100d of FIG. 21), the home appliance (100e of FIG. 21), the IoT device (100f of FIG. 21), a digital broadcast terminal, a hologram device, a public safety device, an MTC device, a medicine device, a fintech device (or a finance device), a security device, a climate/environment device, the AI server/device (400 of FIG. 21), the BSs (200 of FIG. 21), a network node, etc. The wireless device may be used in a mobile or fixed place according to a use-example/service.

In FIG. 23, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

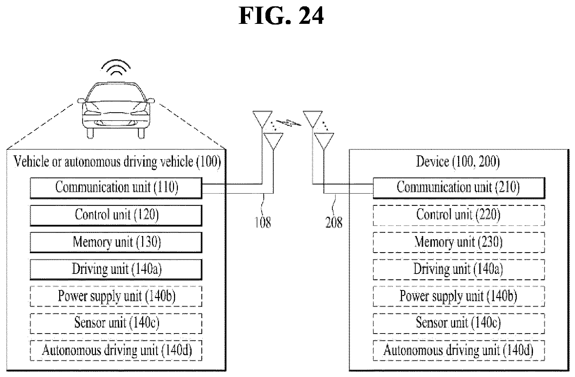

FIG. 24 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 24, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 23, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). Also, the driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the acquired data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly acquired data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology, and may be implemented in standards such as LTE Cat NB1 and/or LTE Cat NB2, and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology, and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication, and is not limited to the above-described names. As an example, ZigBee technology may generate personal area networks (PANs) related to small/low-power digital communication based on various standards such as IEEE 802.15.4, and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments, or may be replaced with corresponding configurations or features of other embodiments. It is obvious that the embodiments may be configured by combining claims that do not have an explicit citation relationship in the claims or may be included as new claims by amendment after filing.

In this document, embodiments of the present disclosure have been mainly described based on a signal transmission/reception relationship between a terminal and a base station. Such a transmission/reception relationship is extended in the same/similar manner to signal transmission/reception between a terminal and a relay or a base station and a relay. A specific operation described as being performed by a base station in this document may be performed by its upper node in some cases. That is, it is obvious that various operations performed for communication with a terminal in a network comprising a plurality of network nodes including a base station may be performed by the base station or network nodes other than the base station. The base station may be replaced by terms such as a fixed station, a Node B, an eNode B (eNB), an access point, and the like. In addition, the terminal may be replaced with terms such as User Equipment (UE), Mobile Station (MS), Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means.

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure. For example, those skilled in the art may use the components described in the foregoing embodiments in combination. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**INDUSTRIAL APPLICABILITY**

The above-described embodiments of the present disclosure are applicable to various mobile communication systems.

**Claims**

1. A method of transmitting information about object detection by a device in an intelligent transportation system (ITS), the method comprising:

   segmenting sensor data for objects into a plurality of data subsets;
   performing object detection for at least one of the plurality of data subsets; and
   transmitting a message including a result of the object detection,
   wherein a priority related to the object detection is set for each data subset, and
   wherein the device performs the object detection for a first data subset before a second data subset, based on the first data subset having a higher priority than the second data subset.

2. The method of claim 1, wherein a result of the object detection for the first data subset is transmitted before a result of the object detection of the second data subset.

3. The method of claim 1, wherein the plurality of data subsets are related to different physical regions.

4. The method of claim 3, wherein the priority is determined based on a predefined importance for a corresponding physical region.

5. The method of claim 1, wherein the priority is determined based on whether vehicle-to-everything (V2X) communication is supported in a corresponding physical region.

6. The method of claim 1, wherein the priority is determined based on V2X communication with an object included in the data subset.

7. The method of claim 6, wherein a data subset for objects capable of exchanging V2X messages with the device has a higher priority than a data subset for objects not capable of exchanging V2X messages with the device.

8. The method of claim 1, further comprising obtaining the sensor data for the objects through at least one sensor.

9. The method of claim 1, wherein the sensor data includes an image of the objects.

10. The method of claim 1, wherein the message is a sensor data sharing message (SDSM) transmitted through wireless communication.

11. A computer-readable recording medium recording a program for performing the method of claim 1.

12. A device operating in an intelligent transportation system (ITS), comprising:

    a memory configured to store instructions; and
    a processor configured to perform operations by executing the instructions,
    wherein the operations of the processor include:

       segmenting sensor data for objects into a plurality of data subsets;
       performing object detection for at least one of the plurality of data subsets; and
       transmitting a message including a result of the object detection,

wherein a priority related to the object detection is set for each data subset, and
wherein the device performs the object detection for a first data subset before a second data subset, based on the first data subset having a higher priority than the second data subset.

13. The device of claim 12, further including a transceiver transmitting or receiving a wireless signal under the control of the processor.

14. The device of claim 12, wherein the device is a V2X terminal, a vehicle, or a road side unit (RSU).

# FIG. 1

Evolution to 5G, while maintaining backward compatibility

Advanced use cases
5G V2X R16

Enhanced safety
C-V2X R14/15

Basic safety
802.11p or C-V2X R14

Enhanced range and reliability

Higher throughput
Higher reliability

Wideband raging
and positioning
Lower latency

Vehicle Platooning

Extended Sensors

Remote Driving

Advanced Driving

# FIG. 2

MME / S - GW

MME / S - GW

30

30

S1  S1

S1  S1

20

20

X2

20

eNB

eNB

E-UTRAN

X2

X2

eNB

10

UE

# FIG. 3

AMF / UPF

AMF / UPF

NGC

50

50

NG - C/U    NG - C/U

NG - C/U    NG - C/U

40

40

40

Xn

Xn

Xn

gNB

gNB

gNB

NG - RAN

10

UE

# FIG. 4

| | One Frame (10ms) | |
|---|---|---|
| ... | | ... |

| | Half-Frame (5ms) | | Half-Frame (5ms) | |
|---|---|---|---|---|
| ... | | | | ... |

| | Subframe 0 (1ms) | ... | Subframe 4 (1ms) | Subframe 5 (1ms) | ... | Subframe 9 (1ms) | |
|---|---|---|---|---|---|---|---|
| ... | | | | | | | ... |

Subframe (1ms)

| 15KHz | Slot 0 (14symbols) |
|---|---|

1ms

| 30KHz | Slot 0 (14symbols) | Slot 1 |
|---|---|---|

500us

| 60KHz | Slot 0 (14symbols) | Slot 1 | Slot 2 | Slot 3 |
|---|---|---|---|---|

250us

| 120KHz | Slot 0 (14symbols) | Slot 1 | Slot 2 | Slot 3 | Slot 4 | Slot 5 | Slot 6 | Slot 7 |
|---|---|---|---|---|---|---|---|---|

125us

# FIG. 5

# FIG. 6

PU5-U

(a)

PU5-U

(b)

# FIG. 7

BS (e.g. eNB or gNB)

UE1                    UE2

# FIG. 8

# FIG. 9

| transmission video specifications and communication bandwidth | | |
|---|---|---|
| camera imag | - resolution<br>(e.g. 1920X1080-Full HD)<br>- transmission rate (e.g. 30FPS)<br>- communication bandwidth<br>(e.g. 3Mbps, default value,<br>variable)<br>- transmission protocol (e.g. RTSP)<br>- video encoding scheme (e.g.<br>H.264) | |
| detection result image | - resolution (e.g. 1152X648)<br>- transmission protocol (e.g. RTSP)<br>- video encoding scheme (e.g.<br>H.264) | |

# FIG. 10

EP 4 571 704 A1

# FIG. 11

object detection & detection result analysis for outer or next priority region (ROI)

object detection & detection result analysis for priority region (ROI)

Analysis & MSG Service - B

RSU

Analysis & MSG Service - A

or

V2X MSG

V2X MSG

V2X MSG

Priority detection region

A or B

Application Server (e.g. SoftV2X Server)

UE : Rx PSM

UE : Rx BSM

1. object detection & result analysis delivery

2. requested service process delivery

3. service reception

EP 4 571 704 A1

# FIG. 12

V2X MSG-based distributed mode
- 1st: Connected UE
- 2st: Non Connected UE

V2X communication supporting object : A, C, F

V2X communication non-supporting object : B, D, E

Transmit V2X MSG Via Short or Long Range Comm.

Transmit V2X MSG Via Short or Long Range Comm.

1st : A, C, F

perform CNN → Detect Bounding Box → Classification → frame pixel position indicated by V2X MSG = UE object position (Region of Interest) — Yes → generate & transmit detection result data

No

1205

2st : B, D, E

perform CNN → Detect Bounding Box → Classification → generate & transmit detection result data → identify change in important priority region information — No → maintain existing operation

Yes → reflect in next operation

1210

EP 4 571 704 A1

# FIG. 13

uniformly segmented image region-based distribution

V2X communication supporting object : A, C, F

V2X communication non-supporting object : B, D, E

Transmit V2X MSG Via Short or Long Range Comm.

Receive V2X MSG Via Short or Long Range Comm.

1st : A, B, C

perform CNN → Detect Bounding Box → Classificatio → V2X MSG position information = detected UE position information — Yes → generate & transmit detection result data

No

1305

2st : D, E, F

perform CNN → Detect Bounding Box → Classificatio → V2X MSG position information = detected UE position information — Yes → generate & transmit detection result data → identify change in important priority region information

No

Yes

No

reflect in next operation ← maintain existing operation

1310

EP 4 571 704 A1

# FIG. 14

1410

1405

Priority 1

Priority 2

Priority 3

ImageFrame

Resource1st

Priority 1

Resource2ed

Priority 2

Or

P2  P3

Resource3rd

Priority 3

# FIG. 15

1501
within specific distance from road

1502
around intersection entry direction

1504
right-turn vehicle blind spot

1503

within specific distance from center of intersection

1505
bicycle road section

## FIG. 16

uniformly segmented image region-based distribution

V2X communication supporting object : A, C, F

V2X communication non-supporting object : B, D, E

Receive V2X MSG Via Short or Long Range Comm.

Transmit V2X MSG Via Short or Long Range Comm.

1st: A, B, C

perform CNN → Detect Bounding Box → Classification → V2X MSG position information = detected UE position information → Yes → generate & transmit detection result data

No

2st: D, E, F

perform CNN → Detect Bounding Box → Classification → V2X MSG position information = detected UE position information → Yes → generate & transmit detection result data

No

identify change in important priority region information

No

Yes

reflect in next operation

maintain existing operation

EP 4 571 704 A1

37

# FIG. 17

distribution based on valid V2X reception region first

V2X communication supporting object : A, C, F

V2X communication non-supporting object : B, D, E

Receive V2X MSG Via Short or Long Range Comm.

Transmit V2X MSG Via Short or Long Range Comm.

1st : C, F

perform CNN → Detect Bounding Box → Classification → V2X MSG position information = detected UE position information — Yes → generate & transmit detection result data

No

2st : A, B, D, E

perform CNN → Detect Bounding Box → Classification → V2X MSG position information = detected UE position information — Yes → generate & transmit detection result data → identify change in important priority region information — No

No

Yes

reflect in next operation

maintain existing operation

EP 4 571 704 A1

# FIG. 18

V2X MSG-based distributed mode
- 1st: Connected UE
- 2st: Non Connected UE

V2X communication supporting object : A, C, F

V2X communication non-supporting object : B, D, E

A  B  C  D  E  F

Transmit V2X MSG Via Short or Long Range Comm.

Receive V2X MSG Via Short or Long Range Comm.

1st: A, C, F

perform CNN → Detect Bounding Box → Classification → frame pixel position indicated by V2X MSG = UE object position (Region of Interest) → Yes → generate & transmit detection result data

No

2st: B, D, E

perform CNN → Detect Bounding Box → Classification → generate & transmit detection result data → percentage difference between number of UE detected regions and number of non-UE detected regions ≥ 80% → No → maintain V2X MSG distributed mode

Yes → change region distributed mode

EP 4 571 704 A1

39

# FIG. 19

uniformly segmented image region-based distribution

V2X communication supporting object : A, C, F

V2X communication non-supporting object : B, D, E

Receive V2X MSG Via Short or Long Range Comm.

Transmit V2X MSG Via Short or Long Range Comm.

1st : A, B, C

perform CNN → Detect Bounding Box → Classification → V2X MSG position information = detected UE position information — Yes → generate & transmit detection result data

No

2st : D, E, F

perform CNN → Detect Bounding Box → Classification → V2X MSG position information = detected UE position information — Yes → generate & transmit detection result data → percentage difference between number of UE detected regions and number of non-UE detected regions ≥ 80% — Yes

No

No

change region distributed mode

maintain V2X MSG distributed mode

# FIG. 20

segment sensor data into plural data subsets — C05

perform object detection — C10

transmit message including object detection result — C15

# FIG. 21

1

# FIG. 22

# FIG. 23

Device(100, 200)

| Communication unit (110)<br>(e.g., 5G communication unit) | Control unit (120)<br>(e.g., processor(s)) |
| --- | --- |
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

# FIG. 24

| Vehicle or autonomous driving vehicle (100) |
|---|
| Communication unit (110) |
| Control unit (120) |
| Memory unit (130) |
| Driving unit (140a) |
| Power supply unit (140b) |
| Sensor unit (140c) |
| Autonomous driving unit (140d) |

108    208

| Device (100, 200) |
|---|
| Communication unit (210) |
| Control unit (220) |
| Memory unit (230) |
| Driving unit (140a) |
| Power supply unit (140b) |
| Sensor unit (140c) |
| Autonomous driving unit (140d) |

## INTERNATIONAL SEARCH REPORT

| International application No. |
| --- |
| **PCT/KR2023/011210** |

| A. | CLASSIFICATION OF SUBJECT MATTER |
| --- | --- |

**G08G 1/09**(2006.01)i; **G08G 1/01**(2006.01)i; **G08G 1/0962**(2006.01)i; **H04W 4/40**(2018.01)i; **G08C 17/02**(2006.01)i; **G06V 20/54**(2022.01)i

According to International Patent Classification (IPC) or to both national classification and IPC

| B. | FIELDS SEARCHED |
| --- | --- |

Minimum documentation searched (classification system followed by classification symbols)

G08G 1/09(2006.01); B60W 50/14(2012.01); G08G 1/01(2006.01); G08G 1/0967(2006.01); G08G 1/0969(2006.01); H04L 29/08(2006.01); H04W 4/40(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 교통(traffic), 우선순위(order of priority), 데이터(data), 메시지(message), 객체(object), 차량(vehicle)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2021-0020500 A (HYUNDAI MOBIS CO., LTD.) 24 February 2021 (2021-02-24)<br>See paragraphs [0003]-[0085]. | 1-4,6,8-14 |
| Y | | 5,7 |
| Y | KR 10-2022-0040569 A (UNIST(ULSAN NATIONAL INSTITUTE OF SCIENCE AND TECHNOLOGY)) 31 March 2022 (2022-03-31)<br>See paragraphs [0054]-[0058] and claims 2-6. | 5,7 |
| A | KR 10-1210875 B1 (KOREA UNIVERSITY RESEARCH AND BUSINESS FOUNDATION) 10 December 2012 (2012-12-10)<br>See claim 1. | 1-14 |
| A | US 2020-0118436 A1 (QUALCOMM INCORPORATED) 16 April 2020 (2020-04-16)<br>See entire document. | 1-14 |

☑ Further documents are listed in the continuation of Box C.     ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **20 November 2023** | **20 November 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/011210** |

### C.    DOCUMENTS CONSIDERED TO BE RELEVANT

| Category* | Citation of document, with indication, where appropriate, of the relevant passages | Relevant to claim No. |
| --- | --- | --- |
| A | KR 10-2021-0081724 A (ATECTN CO., LTD.) 02 July 2021 (2021-07-02)<br>See claims 1-6. | 1-14 |

Form PCT/ISA/210 (second sheet) (July 2022)

**INTERNATIONAL SEARCH REPORT**
Information on patent family members

International application No.

**PCT/KR2023/011210**

| Patent document cited in search report | | | Publication date (day/month/year) | Patent family member(s) | | | Publication date (day/month/year) |
|---|---|---|---|---|---|---|---|
| KR | 10-2021-0020500 | A | 24 February 2021 | | None | | |
| KR | 10-2022-0040569 | A | 31 March 2022 | KR | 10-2416446 | B1 | 06 July 2022 |
| KR | 10-1210875 | B1 | 10 December 2012 | KR | 10-2011-0113579 | A | 17 October 2011 |
| | | | | WO | 2011-126215 | A2 | 13 October 2011 |
| | | | | WO | 2011-126215 | A3 | 12 January 2012 |
| US | 2020-0118436 | A1 | 16 April 2020 | CA | 2991314 | A1 | 23 February 2017 |
| | | | | CN | 107925853 | A | 17 April 2018 |
| | | | | CN | 107925853 | B | 26 June 2020 |
| | | | | E0 | 44357 | T2 | 28 October 2019 |
| | | | | EP | 3338470 | A1 | 27 June 2018 |
| | | | | EP | 3338470 | B1 | 08 May 2019 |
| | | | | ES | 2738655 | T3 | 24 January 2020 |
| | | | | JP | 2018-530810 | A | 18 October 2018 |
| | | | | JP | 6885925 | B2 | 16 June 2021 |
| | | | | KR | 10-2018-0042244 | A | 25 April 2018 |
| | | | | KR | 10-2427586 | B1 | 29 July 2022 |
| | | | | TW | 201713129 | A | 01 April 2017 |
| | | | | TW | I751974 | B | 11 January 2022 |
| | | | | US | 10553112 | B2 | 04 February 2020 |
| | | | | US | 10971008 | B2 | 06 April 2021 |
| | | | | US | 2017-0053530 | A1 | 23 February 2017 |
| | | | | WO | 2017-030887 | A1 | 23 February 2017 |
| KR | 10-2021-0081724 | A | 02 July 2021 | KR | 10-2287169 | B1 | 09 August 2021 |

Form PCT/ISA/210 (patent family annex) (July 2022)